# EUROPÄISCHE PATENTSCHRIFT

(11) **EP 2 925 545 B1**
(45) Veröffentlichungstag und Bekanntmachung des Hinweises auf die Patenterteilung: **24.08.2016**
(21) Anmeldenummer: 13794884.0
(22) Anmeldetag: 20.11.2013
(51) Int. Cl.: B60G 15/06

(54) **KOPFLAGERANORDNUNG ZUR ANBINDUNG EINES FEDERBEINS AN EINEN FAHRZEUGAUFBAU**
HEAD BEARING ARRANGEMENT FOR CONNECTING A SUSPENSION STRUT TO A VEHICLE BODY
ENSEMBLE PALIER DE TÊTE DESTINÉ AU RACCORDEMENT D'UNE JAMBE DE SUSPENSION À UNE CARROSSERIE DE VÉHICULE

(30) Priorität: 27.11.2012 DE 102012111471
(43) Veröffentlichungstag der Anmeldung: 07.10.2015
(73) Patentinhaber: ThyssenKrupp Bilstein GmbH, 58256 Ennepetal (DE)
(72) Erfinder: FOX, Carsten, 44339 Dortmund (DE); NOACK, Christian, 50670 Köln (DE)
(74) Vertreter: ThyssenKrupp Intellectual Property GmbH
(86) Internationale Anmeldenummer: PCT/EP2013/074226
(87) Internationale Veröffentlichungsnummer: WO 2014/082900

(56) Entgegenhaltungen:
- EP-A1- 0 381 560
- EP-A2- 1 078 783
- DE-C1- 4 104 859
- DE-C1- 10 051 769
- FR-A1- 2 535 259
- FR-A1- 2 898 170
- US-A- 5 788 262

## Beschreibung

Die vorliegende Erfindung betrifft eine Kopflageranordnung zur Anbindung eines Federbeins an einen Fahrzeugaufbau, mit einem Kopflagergehäuse und mit einem Federteller, an dem eine Tragfeder des Federbeins abgestützt ist und wobei der Federteller am Kopflagergehäuse angeordnet ist.

### STAND DER TECHNIK

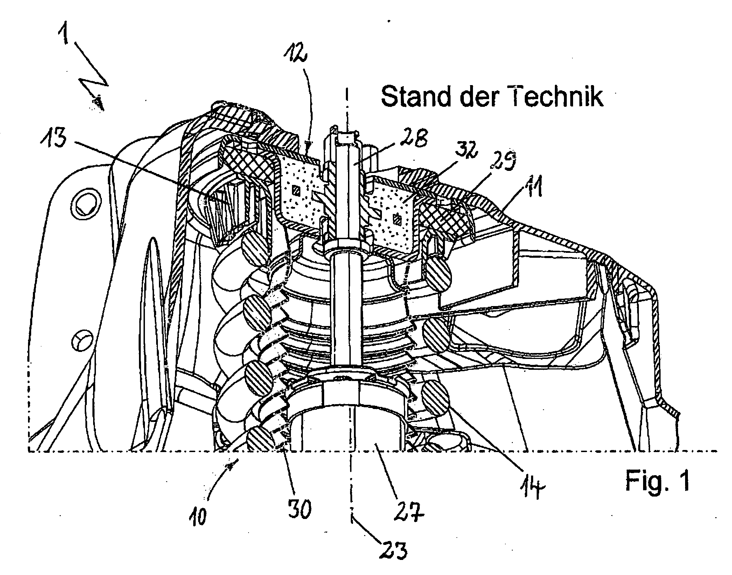

Figur 1 zeigt eine Kopflageranordnung 1 zur Anbindung eines Federbeins 10 an einen Fahrzeugaufbau 11 in einer bekannten Ausführungsform. Das Federbein 10 ist gebildet durch eine Tragfeder 14 sowie einen Schwingungsdämpfer 27, wobei eine Kolbenstange 28 des Schwingungsdämpfers 27 in einem Kopflagergehäuse 12 aufgenommen ist. Das Kopflagergehäuse 12 ist in nicht näher gezeigter Weise mit dem Fahrzeugaufbau 11 starr verbunden, wobei der Fahrzeugaufbau 11 im Bereich der Federdomaufnahme gezeigt ist. Um beim Betrieb des Kraftfahrzeugs eine Bewegung des Federbeins 10 im Fahrzeugaufbau 11 zu ermöglichen, befindet sich im Kopflagergehäuse 12 ein elastischer Stoff 32, der gewöhnlich durch ein Gummielement gebildet ist, und in diesem ist die Kolbenstange 28 gegenüber dem Kopflagergehäuse 12 elastisch gehalten.

Die Tragfeder 14 des Federbeins 10 ist an einem Federteller 13 abgestützt, und der Federteller 13 ist über ein elastisches Federelement 29 am Kopflagergehäuse 12 abgestützt aufgenommen. Dabei wird der Federteller 13 gewöhnlich aus einem Kunststoffmaterial ausgebildet, wobei es bei Bewegungen des Federbeins 10 im Fahrzeugaufbau 11 zu Kontaktgeräuschen zwischen dem Federteller 13 und dem Kopflagergehäuse kommen kann. Insbesondere die nachgiebige Ausführung des elastischen Federelementes 29 zur Abstützung des Federtellers 13 im Kopflagergehäuse 12 lässt eine gewisse Beweglichkeit des Federtellers 13 zu, und bei Kontakt der Innenseite des Federtellers 13 mit dem Abschnitt des Kopflagergehäuses 12, der den elastischen Stoff 32 aufnimmt, kann es zur Geräuschbildung kommen, die von Fahrzeuginnsassen des Kraftfahrzeugs als störend empfunden werden.

Durch das Einfedern der Tragfeder 14 entstehen ferner Drehmomente um die Längsachse 23, die von der Tragfeder 14 in den Federteller 13 übertragen werden. Ferner können Tragfedern 14 zum Einsatz kommen, die nicht angeschliffene Enden aufweisen, wodurch sich Kippmomente auf den Federteller 13 ergeben können. Folglich können sowohl durch die rotatorischen Momente um die Längsachse 23 als auch durch die Kippmomente, die von der Tragfeder 14 in den Federteller 13 übertragen werden, Bewegungen des Federtellers 13 gegenüber dem Kopflagergehäuse 12 erzeugt werden, die unabhängig voneinander zur Geräuschbildung beitragen können und die es zu vermeiden gilt.

Die FR-A-2898170 offenbart eine Kopflageranordnung zur Anbindung eines Federbeins.

Das Dokument DE-C-10051769 offenbart eine Lagerung mit einer Lagerkappe für einen Schwingungsdämpfer.

Die FR-A-2535259 eine obere Dämpferbefestigung offenbart.

In keinem der vorgenannten Dokumente ist eine im Kegelsitz angeordnete Verzahnung zwischen dem Federteller und dem Kopflagergehäuse offenbart.

### OFFENBARUNG DER ERFINDUNG

Aufgabe der Erfindung ist es, eine Kopflageranordnung zur Anbindung eines Federbeins an einen Fahrzeugaufbau zu schaffen, die einfach aufgebaut ist und im Betrieb des Fahrzeugs keine Geräusche verursacht.

Diese Aufgabe wird ausgehend von einer Kopflageranordnung zur Anbindung eines Federbeins gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Federteller über einen Kegelsitz am Kopflagergehäuse angeordnet ist und wobei im Kegelsitz eine Verzahnung zwischen dem Federteller und dem Kopflagergehäuse eingebracht ist.

Die Erfindung geht dabei von dem Gedanken aus, den Federteller unmittelbar auf dem Kopflagergehäuse anzuordnen. Dabei kann das elastische Federelement entfallen, was gewöhnlich zur Geräuschvermeidung dienen soll, jedoch können erfindungsgemäß Bewegungen im Federteller gegenüber dem Kopflagergehäuse bereits dadurch vermieden werden, dass der Federteller über einen Kegelsitz am Kopflagergehäuse angeordnet ist. Um eine sichere Kraft- und Momentübertragung zwischen dem Federteller und dem Kopflagergehäuse sicherzustellen, befindet sich im Kegelsitz eine Verzahnung zwischen dem Federteller und dem Kopflagergehäuse. Folglich wird die Verbindung des Federtellers am Kopflagergehäuse in Richtung zur Längsachse durch einen Reibschluss gebildet, der durch den Kegelsitz erzeugt wird, und eine Verdrehung des Federtellers am Kopflagergehäuse wird durch einen Formschluss erzeugt, der durch die Verzahnung im Kegelsitz hergestellt wird. Im Ergebnis ergibt sich eine mechanisch hoch belastbare starre Verbindung zwischen dem Federteller und dem Kopflagergehäuse, sodass sich auch nach längerem Betrieb des Fahrzeugs keine Bewegung zwischen dem Federteller und dem Kopflagergehäuse einstellt und sodass die Kopflageranordnung folglich auch keine Geräusche verursacht. Dabei wird vordergründig der Effekt ausgenutzt, dass auch bei einem Weiten des Federtellers oder bei einer Oberflächenveränderung im Kegelsitz immer ein spielfreier Halt des Federtellers auf dem Kopflagegehäuse sichergestellt ist, da die Tragfeder des Federbeins, die auf den Federteller drückt, diesen dadurch auf den Kegelabschnitt nachsetzt.

Das Kopflagergehäuse kann topfartig oder napfartig mit einem leicht kegelförmigen Außenmantel ausgeführt sein, sodass im inneren Bereich des topfartigen Kopflagergehäuses der elastische Stoff zur Aufnahme der Kolbenstange aufgenommen ist. Durch die topfartige Ausführung wenigstens eines Teils des Kopflagergehäuses kann ein Kegelabschnitt gebildet werden, der folglich eine Kegelaußenfläche aufweist. Auf dieser Kegelaußenfläche kann der Federteller aufgesetzt werden, der eine korrespondierend zur Kegelaußenfläche ausgebildete Kegelaufnahme zur Anordnung auf der Kegelaußenfläche besitzen kann. Durch diesen so gebildeten Kegelsitz kann der Federteller mit seiner Kegelaufnahme klemmend auf den Kegelabschnitt des Kopflagergehäuses aufgesetzt werden. Die Verzahnung kann sich dabei zwischen dem Kegelabschnitt und der Kegelaufnahme befinden. Der Kegelwinkel der Kegelaufnahme und der Kegelwinkel der zur Kegelaufnahme gleiche Winkel des Kegelabschnittes kann so ausgebildet sein, dass der Federteller mit seiner die Kegelaufnahme selbsthaltend auf dem Kegelabschnitt des Kopflagegehäuses aufsitzen kann.

Beispielsweise kann auf der Kegelaußenffäche des Kopflagergehäuses eine Zahnstruktur eingebracht sein. Alternativ oder zusätzlich kann eine Zahnstruktur innen in der Kegelaufnahme eingebracht sein, die korrespondierend zur Zahnstruktur auf der Kegelaußenfläche ausgebildet ist. Die Zahnstruktur kann aus einer Vielzahl von Zähnen bestehen, die in Richtung zur Längsachse länglich ausgerichtet sind und über dem Kegelabschnitt und/oder der Kegelaufnahme verlaufen. Folglich kann der Federteller aus Richtung der Längsachse auf dem Kegelabschnitt des Kopflagergehäuses gefügt werden, sodass die Zähne der Zahnstruktur in der Kegelaufnahme in die Zahnlücken der Zähne auf der Kegelaußenfläche des Kopflagergehäuses gelangen. Insbesondere dadurch entsteht in Rotationsrichtung des Federtellers auf dem Kopflagergehäuse ein Formschluss, sodass Drehmomente, die über die einfedemde Tragfeder auf den Federteller übertragen werden, unmittelbar in das Kopflagergehäuse weitergeleitet werden können, ohne dass sich eine Verdrehung des Federtellers auf dem Kopflagergehäuse einstellt.

Gemäß einer weiteren möglichen Ausführungsform kann die Verzahnung zwischen dem Federteller und dem Kopflagergehäuse auf dem Umfang verteilt ausgebildete Tragbereiche aufweisen. Durch diskret auf dem Umfang verteilt ausgebildete Tragbereiche kann eine Alternative zu einem vollumfänglichen Tragbereich geschaffen werden und die Verzahnung kann auf der Kegelaußenfläche und/oder in der Kegelaufnahme vollumfänglich oder in diskreten Bereichen vorgesehen sein. Beispielsweise kann die Verzahnung zwischen dem Federteller und dem Kopflagergehäuse auf dem Umfang verteilt ausgebildete Tragbereiche aufweisen. Wird der Federteller auf dem Kopflagergehäuse gefügt, so liegt die Kegelaufnahme am Federteller lediglich in den Tragbereichen auf der Kegelaußenfläche des Kopflagergehäuses auf. Dadurch werden definierte Tragbereiche zur Abstützung in axialer Richtung gebildet, und beispielsweise können drei unter einer gleichen Winkelteilung auf den Umfang verteilt ausgebildete Tragbereiche zwischen dem Federteller und dem Kopflagergehäuse vorgesehen werden. Insbesondere kann auch die Verzahnung zwischen dem Federteller und dem Kopflagergehäuse auf die Tragbereiche begrenzt sein, oder die Tragbereiche dienen zur axialen Auflage der Kegelaufnahme auf der Kegelaußenfläche, um für die Übertragung axialer Kräfte in Richtung der Längsachse auf die Tragbereiche begrenzte Kraftübertragungen zu bilden, wobei bei einer vollumfänglichen Verzahnung der Formschluss zwischen dem Federteller und dem Kopflagergehäuse über dem gesamten Umfang gebildet sein kann. Insbesondere können sich das Kopflagergehäuse und der Federteller um eine Längsachse des Federbeins herum erstrecken, wobei die Verzahnung zwischen dem Kopflagergehäuse und dem Federteller entweder in Umfangsteilbereichen oder vorzugsweise vollumfänglich ausgebildet ist.

Gemäß einer weiteren vorteilhaften Ausführungsform der Kopflageranordnung kann der Kontakt zwischen der Kegelaufnahme und der Kegelaußenfläche über an den Zähnen der Zahnstrukturen ausgebildeten Zahnflanken erzeugt werden. Dadurch wird ein besonders starrer Formschluss zwischen der Kegelaufnahme und der Kegelaußenfläche geschaffen, der insbesondere spielfrei ist, da die Zähne sich über ihre Zahnflanken ineinander verkeilen. Die Zähne der Kegelaufnahme befinden sich dabei in einer kämmenden Anordnung mit den Zähnen der Kegelaußenfläche. Da die Zähne einander über ihre seitlichen Zahnflanken tragen, entstehen besonders hohe Flächenpressungen im Kontakt zwischen den Zähnen. Alternativ können die Zähne über ihre Zahnköpfe tragen und bis auf die Oberfläche der Kegelaufnahme oder bis auf die Kegelaußenfläche reichen, sodass nur Teile der Zähne oder alle Zähne über ihre Zahnköpfe tragen.

Eine besonders vorteilhafte Ausführungsform der Kopflageranordnung umfasst ein Kopflagergehäuse aus einem metallischen Werkstoff, beispielsweise aus Aluminium, und der Federteller kann vorteilhafterweise aus einem Kunststoffmaterial ausgebildet sein. Insbesondere bei einer derartigen Materialpaarung kann vorgesehen sein, dass die Zähne der Zahnstruktur auf der Kegelaußenfläche des Kegelabschnittes Schneidkanten aufweisen, die sich beim Fügen des Federtellers auf dem Kegelabschnitt in die Kegelaufnahme des Federtellers wenigstens teilweise einschneiden. Damit kann der Federteller mit einer Kegelaufnahme gebildet sein, die zunächst keine Zahnstruktur besitzt, und erst durch das Fügen des Federtellers auf dem Kopflagergehäuse schneiden die Schneidkanten der Zähne auf der Kegelaußenfläche des Kopflagergehäuses in die Oberfläche der Kegelaufnahme im Federteller ein. Durch das Einschneiden der Schneidkanten entsteht in Rotationsrichtung des Federtellers auf dem Kegelabschnitt ebenfalls ein Formschluss, da durch das Einschneiden der Schneidkanten in das Material des Federtellers Kerben entstehen, die die Zähne auf der Kegelaußenfläche des Kegelabschnittes wenigstens im Kopfbereich der Zähne formschlüssig einfassen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine quergeschnittene, perspektivische Ansicht einer Kopflageranordnung zur Anbindung eines Federbeins an einen Fahrzeugaufbau gemäß dem Stand der Technik,
- Figur 2: eine perspektivische Ansicht einer Kopflageranordnung mit einem Kopflagergehäuse und einem Federteller,
- Figur 3: eine perspektivische Ansicht eines Ausführungsbeispiels des Kopflagergehäuses mit den Merkmalen der vorliegenden Erfindung,
- Figur 4: eine perspektivische Ansicht eines Federtellers mit den Merkmalen der vorliegenden Erfindung,
- Figur 5: eine Querschnittsansicht durch die Kopflageranordnung gemäß Figur 2,
- Figur 6: ein weiteres Ausführungsbeispiel einer Kopflageranordnung,
- Figur 7: eine perspektivische Ansicht eins Kopflagergehäuses gemäß des Ausführungsbeispiels in Figur 6,
- Figur 8: eine perspektivische Ansicht eines Federtellers gemäß des weiteren Ausführungsbeispiels und
- Figur 9: eine Detailansicht des Kopflagergehäuses gemäß Figur 7.

Figur 1 zeigt eine Kopflageranordnung gemäß dem Stand der Technik und es wird auf die einleitende Beschreibung verwiesen.

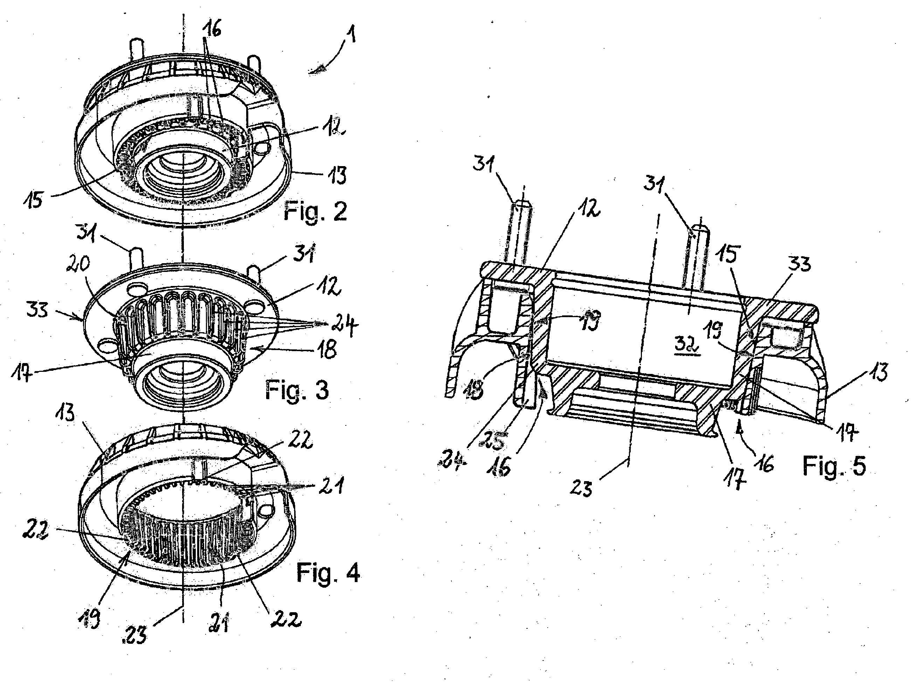

Die Figuren 2, 3 und 4 zeigen ein erstes Ausführungsbeispiel einer Kopflageranordnung 1 zur Anbindung eines Federbeins an einen Fahrzeugaufbau, wie in Zusammenhang mit Figur 1 bereits beschrieben. Figur 2 zeigt dabei den Federteller 13 in einer an ein Kopflagergehäuse 12 gefügten Anordnung, Figur 3 zeigt das Kopflagergehäuse 12 in einer perspektivischen Ansicht und Figur 4 zeigt den Federteller 13 in einer perspektivischen Ansicht. Das Kopflagergehäuse 12 und der Federteller 13 erstrecken sich gemeinsam um eine Längsachse 23, die zugleich der Längsachse des Federbeins entspricht, das mit der Kopflageranordnung 1 im Fahrzeugaufbau aufnehmbar ist.

Figur 2 zeigt die Verbindung zwischen dem Kopflagergehäuse 12 und dem Federteller 13 über einen Kegelsitz 15, und im Kegelsitz 15 ist eine Verzahnung 16 zwischen dem Federteller 13 und dem Kopflagergehäuse 12 eingebracht. Der Federteller 13 ist dabei aus Richtung der Längsachse 23 auf das Kopflagergehäuse 12 gefügt worden, sodass die Verzahnung 16 zwischen dem Kopflagergehäuse 12 und dem Federteller 13 formschlüssig ineinander gefügt ist. Die Ausbildung der Verzahnung 16 wird nachfolgend in Zusammenhang mit den Figuren 3 und 4 näher beschrieben.

Figur 3 zeigt das Kopflagergehäuse 12 in einer perspektivischen Ansicht, und am Kopflagergehäuse 12 sind mehrere Verbindungsbolzen 31 angeordnet, über die das Kopflagergehäuse 12 im Fahrzeugaufbau, insbesondere im Federdom, starr aufgenommen werden kann. Beispielsweise können auf die Verbindungsbolzen 31 Schraubenmuttern aufgeschraubt werden. Um das Kopflagergehäuse 12 im Wesentlichen plan an die Innenseite im Federdom anzubringen, weist dieses einen tellerförmigen Unterbau 33 auf, an den sich ein Kegelabschnitt 17 befindet, und im Kegelabschnitt 17 kann ein elastischer Stoff aufgenommen werden, über den die Kolbenstange des Schwingungsdämpfers des Federbeins elastisch im Kopflagergehäuse 12 aufgenommen werden kann.

Der Kegelabschnitt 17 weist eine Kegelaußenfläche 18 auf, und auf der Kegelaußenfläche 18 ist eine Zahnstruktur 20 aufgebracht. Die Zähne 24 der Zahnstruktur 20 erstrecken sich auf dem Kegelabschnitt 17 etwa parallel zur Längsachse 23. Dabei weist der Kegelabschnitt 17 endseitig einen etwas geringeren Durchmesser auf als auf der Seite des tellerförmigen Unterbaus 33. Folglich kann der in Figur 4 gezeigte Federteller 13 über seine Kegelaufnahme 19 aus Richtung der Längsachse 23 auf den Kegelabschnitt 17 gefügt werden, sodass es zu einem selbsthaltenden, reibschlüssigen Kontakt zwischen der Kegelaußenfläche 18 des Kopflagergehäuses 12 und der Kegelaufnahme 19 des Federtellers 13 kommen kann.

Figur 4 zeigt den Federteller 13 in einer perspektivischen Ansicht, wobei dieser einen um die Längsachse 23 umlaufenden etwa U-förmigen Querschnitt aufweist, in dem die Tragfeder des Federbeins aufgenommen werden kann. Innenseitig, in Richtung zur Längsachse 23 wird der U-förmige Querschnitt begrenzt durch eine Kegelaufnahme 19, und auf der Innenseite der Kegelaufnahme 19 befindet sich eine weitere Zahnstruktur 21, die zur Zahnstruktur 20 auf der Kegelaußenfläche 18 des Kopflagergehäuses 12 korrespondierend ausgeführt ist. Wird der Federteller 13 auf dem Kegelabschnitt 17 des Kopflagergehäuses 12 gefügt, so kann sich in Richtung der Längsachse 23 ein kraftschlüssiger Sitz des Federtellers 13 auf dem Kopflagergehäuse 12 ausbilden, wodurch eine Klemmung zwischen dem Federteller 13 und dem Kopflagergehäuse 12 erreicht wird.

Durch die ineinandergreifenden Zähne 24 und 25 der Zahnstruktur 20 außenseitig auf dem Kegelabschnitt 17 und der Zahnstruktur 21 innenseitig in der Kegelaufnahme 19 wird ferner ein Formschluss erreicht, durch den insbesondere eine Verdrehung des Federtellers 13 auf dem Kopflagergehäuse 12 verhindert wird.

Figur 5 zeigt eine Querschnittsansicht durch die Kopflageranordnung 1 gemäß Figur 2, die sich um die Längsachse 23 herum erstreckt. Das Kopflagergehäuse 12 kann als Metall-Druckgussbauteil ausgeführt sein, während der Federteller 13 aus einem Kunststoffmaterial hergestellt sein kann. Am tellerförmigen Unterbau 33 sind die Verbindungsbolzen 31 angeordnet, und auf der der Anordnung der Verbindungsbolzen 31 gegenüberliegenden Seite des tellerförmigen Unterbaus 33 befindet sich der Kegelabschnitt 17 zur Aufnahme des Federtellers 13. Dabei ist der Aufnahmeraum zur Aufnahme eines elastischen Stoffes 32 gezeigt, über den die Kolbenstange des Schwingungsdämpfers des Federbeins im Kopflagergehäuse 12 aufgenommen werden kann.

Die Verzahnung 16 zwischen der Kegelaußenfläche 18 und der Kegelaufnahme 19 befindet sich im Bereich des Kegelsitzes 15 zwischen dem Federteller 13 und dem Kopflagergehäuse 12, wobei beispielhaft auf der linken Seite der Längsachse 23 ein Zahn 24 auf der Kegelaußenfläche 18 einen Zahn 25 in der Kegelaufnahme 19 teilweise überdeckt, woraus hervorgeht, dass die Zähne 24 und 25 in Umfangsrichtung formschlüssig ineinandergreifen.

Auf der rechten Seite der Längsachse 23 liegt ein Kontakt des Kegelabschnittes 17 mit der Kegelaufnahme 19 in der Schnittebene, woraus hervorgeht, dass in Richtung der Längsachse 23 ein kraftschlüssiger Kontakt zwischen dem Kegelabschnitt 17 und der Kegelaufnahme 19 ausgebildet ist.

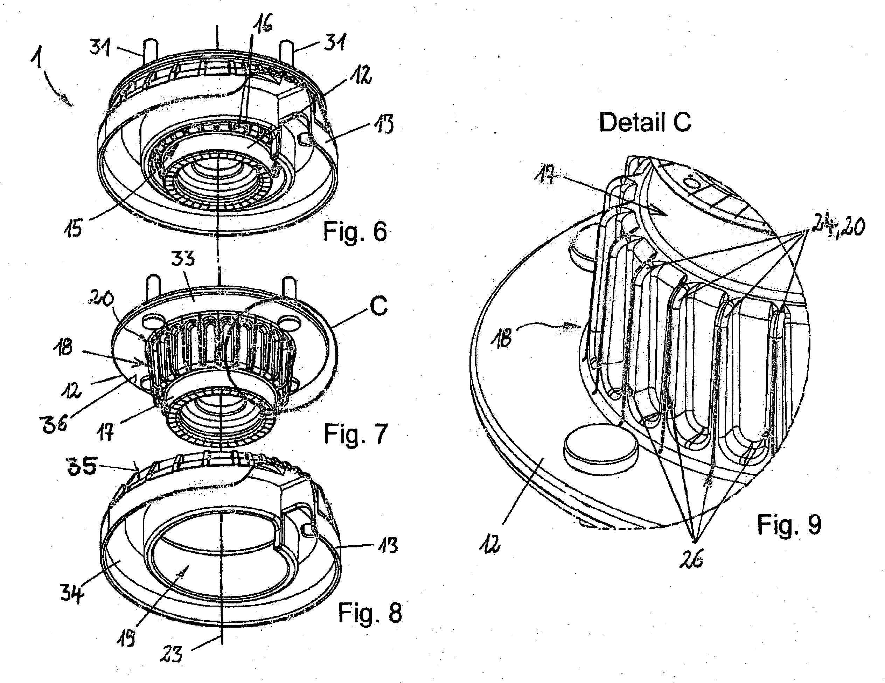

Die Figuren 6, 7 und 8 zeigen ein weiteres Ausführungsbeispiel einer Kopflageranordnung 1 mit einem Kopflagergehäuse 12 und mit einem Federteller 13, wobei die Kopflageranordnung 1 in Figur 6 in einer gefügten Anordnung dargestellt sind, und Figur 7 zeigt das Kopflagergehäuse 12 einzeln und Figur 8 zeigt den Federteller 13 einzeln in einer jeweils perspektivischen Ansicht. Die Kopflageranordnung 1, das Kopflagergehäuse 12 und der Federteller 13 in den Figuren 6, 7 und 8 besitzen jeweils eine gemeinsame Längsachse 23.

Die in Figur 6 gezeigte Kopflageranordnung 1 zeigt das Kopflagergehäuse 12 mit den an diesem angebrachten Verbindungsbolzen 31, und auf dem Kopflagergehäuse 12 ist der Federteller 13 über einen Kegelsitz 15 angeordnet. Der Kegelsitz 15 weist eine Verzahnung 16 auf, die in Zusammenhang mit den folgenden Figuren näher beschrieben wird.

Figur 7 zeigt das Kopflagergehäuse 12 mit der Kegelaußenfläche 18 auf dem Kegelabschnitt 17, auf dem eine Zahnstruktur 20 aufgebracht ist. Das Detail C ist in der Figur 9 näher dargestellt.

Figur 9 zeigt ein Detail des Kopflagergehäuses 12 gemäß dem zweiten Ausführungsbeispiel. Auf der Kegelaußenfläche 18 des Kegelabschnittes 17 sind Zähne 24 zur Bildung der Zahnstruktur 20 aufgebracht. Die Zähne 24 weisen Schneidkanten 26 an ihren Stirnseiten auf, und die Schneidkanten 26 können sich bei einem Fügen des Federtellers 13 auf den Kegelabschnitt 17 in die Kegelaufnahme 19 innenseitig in den Federteller 13 einschneiden. Dabei ist eine Mindest-Fügekraft des Federtellers 13 aus Richtung der Längsachse 23 auf das Kopflagergehäuse 12 erforderlich, um ein Einschneiden der Schneidkanten 26 auf den Zähnen 24 der Zahnstruktur 20 in das Material der Kegelaufnahme 19 des Federtellers 13 zu erreichen.

Figur 8 zeigt den Federteller 13 für das weitere Ausführungsbeispiel, und in der Kegelaufnahme 19 ist keine weitere Zahnstruktur eingebracht. Das Material des Federtellers 13 ist weicher ausgeführt als das Material des Kopflagergehäuses 12, und wenn die Tragfeder des Federbeins in der Federaufnahme 34 des Federtellers 34 einsitzt, so wird der Federteller 13 in Richtung der Längsachse 23 auch im späteren Betrieb der Kopflageranordnung 1 weiter auf das Kopflagergehäuse 12 gedrückt, sodass sich die Schneidkanten 26 auch über die Gebrauchsdauer tiefer in die Kegelaufnahme 19 einarbeiten können.

Der Kegelsitz 15 zwischen dem Federteller 13 und dem Kopflagergehäuse 12 ist dabei so ausgelegt, dass die Oberseite 35 des Federtellers 13 die Unterseite 36 des tellerförmigen Unterbaus 33 des Kopflagergehäuses 12 nicht berührt, und ein Spalt zwischen der Oberseite 35 und der Unterseite 36 verbleibt. Erst dadurch wird erreicht, dass sich auch nach einem längeren Betrieb der Kopflageranordnung 1 durch den Gebrauch des Fahrzeugs der Federteller 13 auf dem Kegelabschnitt 17 des Kopflagergehäuses 12 nicht lockern kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### Bezugszeichenliste

- 1: Kopflageranordnung
- 10: Federbein
- 11: Fahrzeugaufbau
- 12: Kopflagergehäuse
- 13: Federteller
- 14: Tragfeder
- 15: Kegelsitz
- 16: Verzahnung
- 17: Kegelabschnitt
- 18: Kegelaußenfläche
- 19: Kegelaufnahme
- 20: Zahnstruktur
- 21: Zahnstruktur
- 22: Tragbereich
- 23: Längsachse
- 24: Zahn
- 25: Zahn
- 26: Schneidkante
- 27: Schwingungsdämpfer
- 28: Kolbenstange
- 29: elastisches Federelement
- 30: Schutzmanschette
- 31: Verbindungsbolzen
- 32: elastischer Stoff
- 33: tellerförmiger Unterbau
- 34: Federaufnahme
- 35: Oberseite
- 36: Unterseite

## Patentansprüche

1. Kopflageranordnung (1) zur Anbindung eines Federbeins (10) an einen Fahrzeugaufbau (11), mit einem Kopflagergehäuse (12) und mit einem Federteller (13), an dem eine Tragfeder (14) des Federbeins (10) abgestützt ist und wobei der Federteller (13) am Kopflagergehäuse (12) angeordnet ist,
**dadurch gekennzeichnet, dass** der Federteller (13) über einen Kegelsitz (15) am Kopflagergehäuse (12) angeordnet ist und wobei im Kegelsitz (15) eine Verzahnung (16) zwischen dem Federteller (13) und dem Kopflagergehäuse (12) eingebracht ist.

2. Kopflageranordnung (1) nach Anspruch 1, **dadurch gekennzeichnet, dass** das Kopflagergehäuse (12) einen Kegelabschnitt (17) mit einer Kegelaußenfläche (18) aufweist, auf der der Federteller (13) mit einer an diesem ausgebildeten Kegelaufnahme (19) klemmend aufsitzt.

3. Kopflageranordnung (1) nach Anspruch 2, **dadurch gekennzeichnet, dass** auf der Kegelaußenfläche (18) eine Zahnstruktur (20) ausgebildet ist.

4. Kopflageranordnung (1) nach Anspruch 2 oder 3, **dadurch gekennzeichnet, dass** in der Kegelaufnahme (19) eine Zahnstruktur (21) eingebracht ist, die korrespondierend zur Zahnstruktur (20) auf der Kegelaußenfläche (18) ausgebildet ist.

5. Kopflageranordnung (1) nach einem der vorgenannten Ansprüche, **dadurch gekennzeichnet, dass** die Verzahnung (16) zwischen dem Federteller (13) und dem Kopflagergehäuse (12) auf dem Umfang verteilt ausgebildete Tragbereiche (22) aufweist.

6. Kopflageranordnung (1) nach Anspruch 5, **dadurch gekennzeichnet, dass** drei unter einer gleichen Winkelteilung auf dem Umfang verteilt ausgebildete Tragbereiche (22) zwischen dem Federteller (13) und dem Kopflagergehäuse (12) vorgesehen sind.

7. Kopflageranordnung (1) nach einem der Ansprüche 1 bis 4, **dadurch gekennzeichnet, dass** sich das Kopflagergehäuse (12) und der Federteller (13) um eine Längsachse (23) des Federbeins (10) herum erstrecken, wobei die Verzahnung (16) zwischen dem Kopflagergehäuse (12) und dem Federteller (13) in Umfangsteilbereichen oder vorzugsweise vollumfänglich ausgebildet ist.

8. Kopflageranordnung (1) nach einem der vorgenannten Ansprüche, **dadurch gekennzeichnet, dass** der Kontakt zwischen der Kegelaufnahme (19) und der Kegelaußenfläche (18) über an den Zähnen (24, 25) der Zahnstrukturan (20, 21) ausgebildete Zahnflanken erzeugt ist.

9. Kopflageranordnung (1) nach einem der vorgenannten Ansprüche, **dadurch gekennzeichnet, dass** die Zähne (24) der Zahnstruktur (20) auf der Kegelaußenfläche (18) des Kegelabschnittes (17) Schneidkanten (26) aufweisen, die sich beim Fügen des Federtellers (13) auf dem Kegelabschnitt (17) in die Kegelaufnahme (19) des Federtellers (13) wenigstens teilweise einschneiden.

10. Kopflageranordnung (1) nach einem der vorgenannten Ansprüche, **dadurch gekennzeichnet, dass** das Kopflagergehäuse (12) aus einem metallischen Werkstoff, insbesondere aus Aluminium, ausgebildet ist und dass der Federteller (13) aus einem Kunststoffmaterial ausgebildet ist.

## Claims

1. Head bearing arrangement (1) for connecting a spring strut (10) to a vehicle body (11), having a head bearing housing (12) and having a spring plate (13) on which a load-bearing spring (14) of the spring strut (10) is supported, wherein the spring plate (13) is arranged on the head bearing housing (12),
**characterized in that** the spring plate (13) is arranged on the head bearing housing (12) by way of a conical seat (15), wherein a toothing (16) is formed in the conical seat (15) between the spring plate (13) and the head bearing housing (12).

2. Head bearing arrangement (1) according to Claim 1,
**characterized in that** the head bearing housing (12) has a conical section (17) with an conical external surface (18) on which the spring plate (13) is seated in clamped fashion by way of a conical receptacle (19) formed thereon.

3. Head bearing arrangement (1) according to Claim 2,
**characterized in that** a toothed structure (20) is formed on the conical external surface (18).

4. Head bearing arrangement (1) according to Claim 2 or 3, **characterized in that**, in the conical receptacle (19), there is formed a toothed structure (21) which is of corresponding form to the toothed structure (20) on the conical external surface (18).

5. Head bearing arrangement (1) according to one of the preceding claims, **characterized in that** toothing (16) between the spring plate (13) and head bearing housing (12) has load-bearing regions (22) formed so as to be distributed over the circumference.

6. Head bearing arrangement (1) according to Claim 5,
**characterized in that** three load-bearing regions (22) which are formed so as to be distributed at uniform angular intervals over the circumference are provided between the spring plate (13) and the head bearing housing (12).

7. Head bearing arrangement (1) according to one of Claims 1 to 4, **characterized in that** the head bearing housing (12) and the spring plate (13) extend around a longitudinal axis (23) of the spring strut (10), wherein the toothing (16) between the head bearing housing (12) and the spring plate (13) is formed in partial circumferential regions or preferably over the full circumference.

8. Head bearing arrangement (1) according to one of the preceding claims, **characterized in that** the contact between the conical receptacle (19) and the conical external surface (18) is realized by way of tooth flanks formed on the teeth (24, 25) of the toothed structures (20, 21).

9. Head bearing arrangement (1) according to one of the preceding claims, **characterized in that** the teeth (24) of the toothed structure (20) on the conical external surface (18) of the conical section (17) have cutting edges (26) which at least partially cut into the conical receptacle (19) of the spring plate (13) during the mounting of the spring plate (13) on the conical section (17).

10. Head bearing arrangement (1) according to one of the preceding claims, **characterized in that** the head bearing housing (12) is formed from a metallic material, in particular from aluminum, and **in that** the spring plate (13) is formed from a plastics material.

## Revendications

1. Ensemble palier de tête (1) destiné au raccordement d'une jambe de suspension (10) à une carrosserie de véhicule (11), comprenant un logement de palier de tête (12) et une coupelle de ressort (13), au niveau de laquelle est supporté un ressort de support (14) de la jambe de suspension (10) et la coupelle de ressort (13) étant disposée au niveau du logement de palier de tête (12),
**caractérisé en ce que** la coupelle de ressort (13) est disposée au niveau du logement de palier de tête (12) par le biais d'un siège conique (15), une denture (16) étant prévue dans le siège conique (15) entre la coupelle de ressort (13) et le logement de palier de tête (12).

2. Ensemble palier de tête (1) selon la revendication 1, **caractérisé en ce que** le logement de palier de tête (12) présente une portion conique (17) avec une surface extérieure conique (18), sur laquelle repose avec serrage la coupelle de ressort (13) avec un logement conique (19) réalisé sur celle-ci.

3. Ensemble palier de tête (1) selon la revendication 2, **caractérisé en ce qu'**une structure dentée (20) est réalisée sur la surface extérieure conique (18).

4. Ensemble palier de tête (1) selon la revendication 2 ou 3, **caractérisé en ce que** dans le logement conique (19) est prévue une structure dentée (21) qui est réalisée de manière à correspondre à la structure dentée (20) sur la surface extérieure conique (18).

5. Ensemble palier de tête (1) selon l'une quelconque des revendications précédentes, **caractérisé en ce que** la denture (16) présente, entre la coupelle de ressort (13) et le logement de palier de tête (12), des régions de support (22) réalisées de manière répartie sur la périphérie.

6. Ensemble palier de tête (1) selon la revendication 5, **caractérisé en ce que** trois régions de support (22) réalisées de manière répartie sur la périphérie suivant une répartition angulaire identique sont prévues entre la coupelle de ressort (13) et le logement de palier de tête (12).

7. Ensemble palier de tête (1) selon l'une quelconque des revendications 1 à 4, **caractérisé en ce que** le logement de palier de tête (12) et la coupelle de ressort (13) s'étendent autour d'un axe longitudinal (23) de la jambe de suspension (10), la denture (16) étant réalisée dans des régions partielles de la périphérie ou de préférence sur toute la périphérie entre le logement de palier de tête (12) et la coupelle de ressort (13).

8. Ensemble palier de tête (1) selon l'une quelconque des revendications précédentes, **caractérisé en ce que** le contact entre le logement conique (19) et la surface extérieure conique (18) est produit par le biais de flancs de dents réalisés au niveau des dents (24, 25) des structures dentées (20, 21).

9. Ensemble palier de tête (1) selon l'une quelconque des revendications précédentes, **caractérisé en ce que** les dents (24) de la structure dentée (20) présentent sur la surface extérieure conique (18) de la portion conique (17) des arêtes de coupe (26) qui, lors de l'assemblage de la coupelle de ressort (13) sur la portion conique (17), mordent au moins en partie dans le logement conique (19) de la coupelle de ressort (13).

10. Ensemble palier de tête (1) selon l'une quelconque des revendications précédentes, **caractérisé en ce que** le logement de palier de tête (12) est réalisé en un matériau métallique, en particulier en aluminium, et **en ce que** la coupelle de ressort (13) est réalisée en un matériau en plastique.
